# EUROPEAN PATENT APPLICATION

(11) **EP 4 174 747 A1**
(43) Date of publication of application: **03.05.2023**
(21) Application number: 21832632.0
(22) Date of filing: 21.06.2021
(51) Int. Cl.: G06Q 30/06

(54) **BLOCKCHAIN-BASED TRANSACTION PROCESSING METHOD, CLIENT, PROCESSING TERMINAL AND SYSTEM**

(30) Priority: 30.06.2020 CN 202010619445
(71) Applicant: Jingdong Technology Information Technology Co., Ltd., Beijing 100176 (CN); Jingdong Technology Holding Co., Ltd., Beijing 100176 (CN)
(72) Inventor: LI, Zhicheng, Beijing 100176 (CN)
(74) Representative: karo IP
(86) International application number: PCT/CN2021/101190
(87) International publication number: WO 2022/001716

(57) **Abstract**

Disclosed are a blockchain-based transaction processing method, a client, a processing terminal and system. The method includes: entering a live broadcast interface according to a trigger operation acting on a live broadcast link, and acquiring a user identity; acquiring order information associated with the user identity based on the live broadcast interface; determining multimedia data associated with the order information; and sending the order information and the multimedia data to each node of the blockchain network for recording.

## Description

### CROSS-REFERENCE TO RELATED APPLICATIONS

This application claims priority to Chinese Patent Application No. 202010619445.3, entitled "BLOCKCHAIN-BASED TRANSACTION PROCESSING METHOD, CLIENT, PROCESSING TERMINAL AND SYSTEM" and filed with China National Intellectual Property Administration on June 30, 2020, all contents of which are incorporated herein by reference.

### TECHNICAL FIELD

The present disclosure generally relates to the technical field of blockchain, and more particularly to a blockchain-based transaction processing method, client, processing terminal and system.

### BACKGROUND

After more than ten years of rapid development, e-commerce has matured day by day, Consumers can quickly search for products that match their needs through various online e-commerce platforms, also at the same time, the price of purchased items and the efficient logistics system have greatly reduced the shopping cost of consumers. However, due to the huge differences in shopping experience and transaction process between online shopping and offline shopping, there are still many risks in online shopping to be solved. For example, how to ensure that the items that consumers see through page browsing are highly consistent with the physical objects they receive? With the rise of live commerce sales mode in recent years, after consumers see the anchor reality show in the live broadcast room, the problem that the items they place orders do not match the physical items they actually receive is also frequent. How to solve this problem through effective technical means is particularly important.

At present, the methods for recording transaction process and solving transaction disputes mainly rely on order information and terms of service to judge manually, but there are still the following problems:

at present, due to the large amount of interactive data between anchors and users in online live broadcast rooms, it is difficult to keep the live broadcast content in sections. In addition, the main task of the anchor in the live broadcast room is to recommend items, but there is no guarantee that the items placed for users are consistent with the items displayed and described in the live broadcast room, which leads to many related after-sales disputes.

### SUMMARY

In one aspect, the present disclosure provides blockchain-based transaction processing method, applied to a first client on a blockchain network, including:
entering a live broadcast interface according to a trigger operation acting on a live broadcast link, and acquiring a user identity;
acquiring order information associated with the user identity based on the live broadcast interface;
determining multimedia data associated with the order information; and
sending the order information and the multimedia data to each node of the blockchain network for recording.

In some embodiments, acquiring order information associated with the user identity based on the live broadcast interface includes:
acquiring transaction information and transaction time associated with the user identity;
generating an order identity according to the user identity and the transaction time;
determining a first order state according to the transaction information; and
generating the order information according to the order identity and the first order state.

In some embodiments, the method further includes:
acquiring a live video and object information associated with the live video;
splitting the live video according to the object information to obtain at least one video segment;
determining the multimedia data associated with the order information includes:
acquiring the target object information carried by the order information;
determining a target video segment corresponding to the target object information;
acquiring communication data associated with the user identity based on the target video segment; and
obtaining the multimedia data according to the communication data and the target video segment.

In some embodiments, the method further includes:
monitoring first response information on the blockchain network, the first response information is generated by the blockchain network calling a first processing contract;
determining an order state in the order information according to the first response information;
calling a second processing contract to update a second order state in the order information to a third order state when the order state is the second order state and signature information is received; and
sending updated order information to each node of the blockchain network for recording.

In some embodiments, the method further includes:
acquiring complaint information;
calling a third processing contract according to the complaint information to update a third order state in the order information to a fourth order state; and
sending the complaint information and the updated order information to each node of the blockchain network for recording.

In some embodiments, the method further includes:
monitoring second response information on the blockchain network, the second response information is generated by calling a fourth processing contract by the blockchain network;
determining a first processing result corresponding to the complaint information according to the second response information;
calling a fifth processing contract according to objection information to update a fourth order state in the order information to a fifth order state when the objection information fed back according to the first processing result is obtained; and
sending the objection information and the updated order information to each node of the blockchain network for recording.

In some embodiments, the method further includes:
monitoring third response information on the blockchain network, the third response information is generated by calling a sixth processing contract by the blockchain network; and
determining a second processing result corresponding to the objection information according to the third response information.

In another aspect, the present disclosure provides a blockchain-based transaction processing method, applied to a second client on a blockchain network, including:
monitoring order information and multimedia data on the blockchain network, wherein the order information includes an order identity and an order state;
calling a camera device to shoot a designated area to obtain shooting information and calling a first processing contract to update the first order state in the order information to a second order state when the order state in the order information is a first order state;
carrying out hash calculation according to the order identity to obtain a certificate a deposit certificate identity; and
generating an electronic data deposit certificate according to the deposit certificate identity, shooting information, multimedia data and updated order information, the electronic data deposit certificate is sent to each node of the blockchain network for recording.

In yet another aspect, the present disclosure provides a blockchain-based transaction processing method, applied to a first processing terminal on a blockchain network, including:
monitoring complaint information on the blockchain network, wherein the complaint information carries an order identity;
carrying out hash calculation according to the order identity to obtain a target deposit certificate identity;
traversing the local electronic data deposit certificate to obtain a target electronic data deposit certificate corresponding to the target deposit certificate identity; and
analyzing the complaint information according to the target electronic data deposit certificate to obtain a processing result, sending the processing result to each node of the blockchain network for recording.

In another aspect, the present disclosure provides a blockchain-based transaction processing method, applied to a second processing terminal on a blockchain network, including:
monitoring objection information on the blockchain network, wherein the objection information carries an order identity, and the objection information is obtained by feedback of a first processing result;
calculating according to the order identity to obtain the target deposit certificate identity;
traversing the local electronic data deposit certificate to obtain the target electronic data deposit certificate corresponding to the target deposit certificate identity; and
obtaining a second processing result by analyzing the objection information according to the target electronic data deposit certificate, sending the second processing result to each node of the blockchain network for recording.

In yet another aspect, the present disclosure provides a first blockchain-based client, including:
a first acquisition module, configured for entering a live broadcast interface according to a trigger operation acting on a live broadcast link, and acquiring a user identity;
a second acquisition module, configured for acquiring order information associated with the user identity based on the live broadcast interface;
a determination module, configured for determining multimedia data associated with the order information; and
a sending module, configured for sending the order information and the multimedia data to each node of the blockchain network for recording.

In another aspect, the present disclosure provides a second blockchain-based client, including:
a monitoring module, configured for monitoring order information and multimedia data on the blockchain network, wherein the order information includes an order identity and an order state;
a processing module, configured for calling a camera device to shoot a designated area to obtain shooting information and calling a first processing contract to update the first order state in the order information to a second order state when the order state in the order information is a first order state;
a calculation module, configured for carrying out hash calculation according to the order identity to obtain a certificate a deposit certificate identity; and
a generating module, configured for generating an electronic data deposit certificate according to the deposit certificate identity, shooting information, multimedia data and updated order information, the electronic data deposit certificate is sent to each node of the blockchain network for recording.

In yet another aspect, the present disclosure provides a first blockchain-based processing terminal, including:
a monitoring module, configured for monitoring complaint information on the blockchain network, wherein the complaint information carries an order identity;
a calculation module, configured for carrying out hash calculation according to the order identity to obtain a target deposit certificate identity;
a query module, configured for traversing the local electronic data deposit certificate to obtain a target electronic data deposit certificate corresponding to the target deposit certificate identity; and
an analyzing module, configured for analyzing the complaint information according to the target electronic data deposit certificate to obtain a processing result, sending the processing result to each node of the blockchain network for recording.

In yet another aspect, the present disclosure provides a second blockchain-based processing terminal, including:
a monitoring module, configured for monitoring objection information on the blockchain network, wherein the objection information carries an order identity, and the objection information is obtained by feedback of a first processing result;
a calculation module, configured for calculating according to the order identity to obtain the target deposit certificate identity;
a query module, configured for traversing the local electronic data deposit certificate to obtain the target electronic data deposit certificate corresponding to the target deposit certificate identity; and
an analyzing module, configured for obtaining a second processing result by analyzing the objection information according to the target electronic data deposit certificate, sending the second processing result to each node of the blockchain network for recording.

On the other hand, the present disclosure provides a transaction blockchain-based processing system, the system is a blockchain network composed of a plurality of blockchain nodes;

the blockchain node includes the first blockchain-based client according to the present disclosure, the second blockchain-based client according to the present disclosure, the first blockchain-based processing terminal according to the present disclosure, and the second blockchain-based processing terminal according to the present disclosure.

In yet another aspect, the present disclosure provides a storage medium, the storage medium includes a stored program that executes the methods of the present disclosure while the program is running.

In another aspect, the present disclosure provides an electronic device including a processor, a communication interface, a memory and a communication bus, wherein the processor, the communication interface and the memory communicate with each other through the communication bus; The memory is configured to store computer programs; A processor configured to execute the method of the present disclosure by running a program stored on a memory.

In another aspect, the present disclosure provides a computer program product including instructions that, when run on a computer, cause the computer to perform the methods described herein.

In certain embodiments, by acquiring multimedia data associated with orders, the present disclosure can provide a complete evidence chain for subsequent disputes, and has improved the processing efficiency compared with the way of inquiring from live videos in the prior art, and at the same time, the way that sending it to each node of the blockchain network for recording has realized the sharing of the evidence chain.

### BRIEF DESCRIPTION OF THE DRAWINGS

The accompanying drawings which are incorporated in and constitute a part of the specification illustrate embodiments consistent with the disclosure and together with the description serve to explain the principles of the disclosure.

In order to more clearly explain the technical proposal of the present disclosure, the drawings needed for use in the present disclosure will be briefly described below, and it will be obvious that other drawings may be obtained from these drawings without creative labor for those of ordinary skill in the art.
Fig. 1 is a flowchart of a blockchain-based transaction processing method provided by an embodiment of the present disclosure.
Fig. 2 is a flowchart of a blockchain-based transaction processing method provided by an embodiment of the present disclosure.
Fig. 3 is a flowchart of a blockchain-based transaction processing method provided by an embodiment of the present disclosure.
Fig. 4 is a flowchart of a blockchain-based transaction processing method provided by an embodiment of the present disclosure.
Fig. 5 is a block diagram of a first blockchain-based client provided by an embodiment of the present disclosure.
Fig. 6 is a block diagram of a second blockchain-based client provided by an embodiment of the present disclosure.
Fig. 7 is a block diagram of a first blockchain-based processing terminal provided by an embodiment of the present disclosure.
Fig. 8 is a block diagram of a second blockchain-based processing terminal provided by an embodiment of the present disclosure.
Fig. 9 is a schematic diagram of a blockchain-based transaction processing system provided by an embodiment of the present disclosure.
Fig. 10 is a schematic structural diagram of an electronic device provided by an embodiment of the present disclosure.

### DETAILED DESCRIPTION OF THE EMBODIMENTS

In order to make the purposes, technical solutions and advantages of the disclosed embodiments clearer, the following will be combined with the drawings in the disclosed embodiments, With a clear and complete description of the technical aspects of the embodiments of the present disclosure, it is apparent that the described embodiments are part of, and not all of, the embodiments of the present disclosure, and that the illustrative embodiments of the present disclosure and the description thereof are used to explain the present disclosure and are not unduly limiting the present disclosure. Based on the implementation in the present disclosure. All other embodiments obtained without creative effort by those of ordinary skill in the art fall within the scope of protection of the present disclosure.

It should be noted that relational terms such as "first" and "second" are used herein only to distinguish one entity or operation from another similar entity or operation, and do not necessarily require or imply any such actual relationship or order between these entities or operations. Moreover, the terms "including", "including" or any other variation thereof are intended to encompass non-exclusive inclusion, so that a process, method, article or equipment that includes a set of elements includes not only those elements but also other elements that are not explicitly listed or are inherent to such a process, method, article or equipment. In the absence of further limitations, the elements defined by the phrase "include an ..." do not exclude the existence of other identical elements in the process, method, article or equipment in which the elements are included.

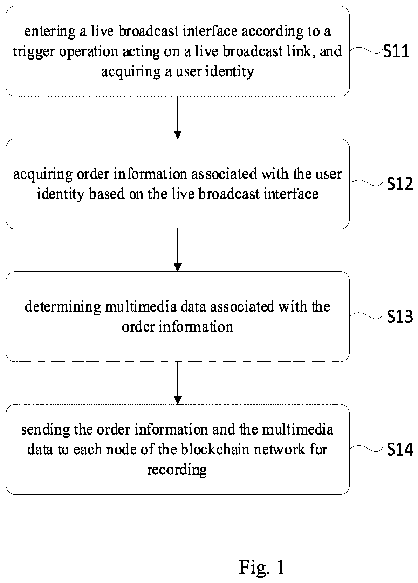

Fig. 1 is a flowchart of a blockchain-based transaction processing method provided by an embodiment of the present disclosure. As shown in Fig. 1, the transaction processing method based on the blockchain provided by the present embodiment is applied to a first client on a blockchain network. The method includes:
Step S 11, entering a live broadcast interface according to a trigger operation acting on a live broadcast link, and acquiring a user identity;
Step S12, acquiring order information associated with the user identity based on the live broadcast interface;
Step S13, determining multimedia data associated with the order information; and
Step S14, sending the order information and the multimedia data to each node of the blockchain network for recording.

The transaction processing method provided by the embodiment is applied to a live broadcast scene. The first client may be a client applied to a buyer, when the user enters the client, the display interface of the client displays a plurality of live links to the user. When a trigger operation of the user acting on a live link is received, the display interface jumps to a live interface corresponding to the live link, and acquires a user identity based on the trigger operation, the user identity can be a user name, a user ID, etc.

In some embodiments, acquiring order information associated with the user identity based on the live broadcast interface includes: acquiring transaction information and transaction time associated with the user identity; generating an order identity according to the user identity and the transaction time; determining a first order state according to the transaction information; generating the order information according to the order identity and the first order state. The first order state is to be shipped.

In some embodiments related to step S13, first it is necessary to acquire a live video and object information associated with the live video; split the live video according to the object information to obtain at least one video segment, and save the split video segment; wherein, the live video is split according to the object information, and the method of segmentation retention is adopted, which can provide a direct evidence chain for the subsequent handling of disputes and other issues, which has improved the processing efficiency compared with the existing method of inquiring from the live video.

It can be understood that the object information associated with the live video may be commodity information such as the quantity of the commodity the price of the commodity and the like. In this embodiment, the live video is split according to the quantity of commodities, so that the video segment corresponding to each commodity in the live video can be obtained. For example, a certain live video includes three commodities: A, B and C, and the live video lasts for 30 minutes. After splitting the live video, the obtained video segment includes: the number of a 0-10 minutes video segment is 1, which corresponds to a commodity A. The number of an 11-20 minutes video segment is 2, which corresponds to a commodity B. The number of a 21-30 minutes video segment is 3, which corresponds to commodity C.

Determining the multimedia data associated with the order information includes: acquiring the target object information carried by the order information; determining a target video segment corresponding to the target object information; acquiring communication data associated with the user identity based on the target video segment; and obtaining the multimedia data according to the communication data and the target video segment.

In some embodiments related to step S13, when determining a commodity in the order information, acquiring communication data associated with a user ID. The communication data can be chat content. Communication data and video clips can be used as multimedia data.

In some embodiments, the method provided by the embodiment further includes: monitoring first response information on the blockchain network, the first response information is generated by the blockchain network calling a first processing contract; determining an order state in the order information according to the first response information; calling a second processing contract to update a second order state in the order information to a third order state when the order state is the second order state and signature information is received; and sending updated order information to each node of the blockchain network for recording.

Understandably, the first response information is generated by the seller client on the blockchain network, where the second order state is shipped, and the signature information is the user's verified signature, such as fingerprint verification, face verification. Therefore, upon receipt of the signature information, the second order state is updated to a third order state, where the third order state may be received.

In some embodiments, the method in this embodiment further includes: acquiring complaint information; calling a third processing contract according to the complaint information to update a third order state in the order information to a fourth order state; and sending the complaint information and the updated order information to each node of the blockchain network for recording.

Understandably, the complaint information is the complaint information initiated by the buyer's client after receiving the items, and the fourth order state is under complaint by the buyer.

In some embodiments, the method in the embodiment further includes: monitoring second response information on the blockchain network, the second response information is generated by calling a fourth processing contract by the blockchain network; determining a first processing result corresponding to the complaint information according to the second response information; calling a fifth processing contract according to objection information to update a fourth order state in the order information to a fifth order state when the objection information fed back according to the first processing result is obtained; and sending the objection information and the updated order information to each node of the blockchain network for recording.

Understandably, the second response information is triggered and generated by the platform side on the blockchain network. When the buyer still has objection with the first processing result, an objection feedback is carried out again based on the first processing result, and the fifth order state is in arbitration.

In some embodiments, the method in the embodiment further includes: monitoring third response information on the blockchain network, the third response information is generated by calling a sixth processing contract by the blockchain network; and determining a second processing result corresponding to the objection information according to the third response information.

Understandably, the third response information is triggered and generated by an arbitration institution on the blockchain network, and the second processing result is a final arbitration result sent by the arbitration institution.

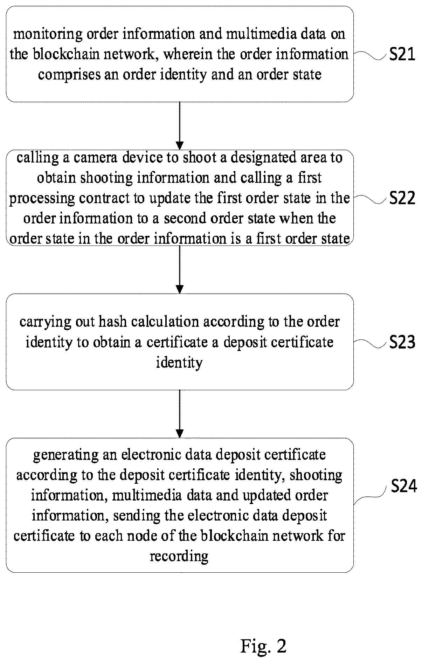

Fig. 2 is a flowchart of a blockchain-based transaction processing method provided by an embodiment of the present disclosure. As shown in Fig. 2, the blockchain-based transaction processing method provided by the present embodiment is applied to a second client on a blockchain network. The method includes:
S21, monitoring order information and multimedia data on the blockchain network, wherein the order information includes an order identity and an order state;
Step S22, calling a camera device to shoot a designated area to obtain shooting information and calling a first processing contract to update the first order state in the order information to a second order state when the order state in the order information is a first order state;
Step S23, carrying out hash calculation according to the order identity to obtain a certificate a deposit certificate identity; and
Step S24, generating an electronic data deposit certificate according to the deposit certificate identity, shooting information, multimedia data and updated order information, the electronic data deposit certificate is sent to each node of the blockchain network for recording.

In some embodiments related to step S22, calling a camera device to shoot a designated area to obtain shooting information may be calling a camera device to shoot an area where the commodity is packed, and the shooting information is image information or video information when an commodity is being packed.

In certain embodiments related to step S23, a technique called digital digest is adopted. The digital digest technique mainly uses a HASH function. The calculation process of this technique is as follows: inputting a string of variable length (i.e.order identity), which is calculated by the HASH function to return a string of fixed length (i.e., the deposit certificate identity).

It should be noted that, digital digest is to change a message of arbitrary length into a short message of fixed length, which is similar to a function whose independent variable is message, that is, Hash function. Digital digest is to use one-way Hash function to "digest" the plaintext which needs to be encrypted into a string of ciphertext of fixed length (128 bits). This string of ciphertext is also called digital fingerprint, which has a fixed length. Moreover, digesting different plaintext into ciphertext always has different results, while the digest of the same plaintext must be consistent.

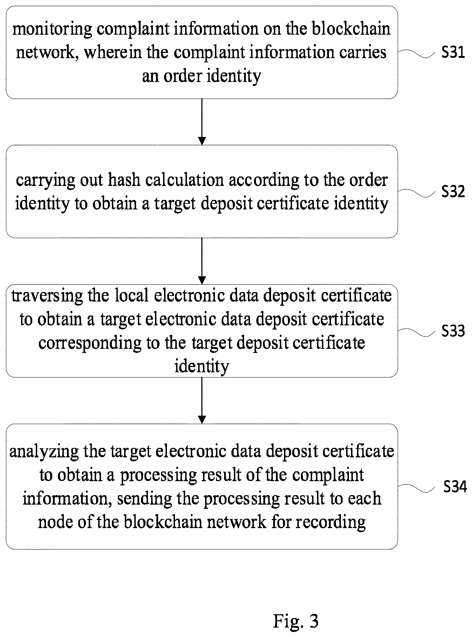

Fig. 3 is a flowchart of a blockchain-based transaction processing method provided by an embodiment of the present disclosure. As shown in Fig. 3, the transaction processing method based on the blockchain provided by the present embodiment is applied to a first processing terminal on a blockchain network. The method includes:
Step S31, monitoring complaint information on the blockchain network, wherein the complaint information carries an order identity;
Step S32, carrying out hash calculation according to the order identity to obtain a target deposit certificate identity;
Step S33, traversing the local electronic data deposit certificate to obtain a target electronic data deposit certificate corresponding to the target deposit certificate identity; and
Step S34, analyzing the complaint information according to the target electronic data deposit certificate to obtain a processing result, sending the processing result to each node of the blockchain network for recording.

In some embodiments, the complaint information may include a complaint text, a complaint picture, a complaint video, and the like.

In certain embodiments related to step S32, a technique called digital digest is adopted. The digital digest technique mainly uses a HASH function. The calculation process of this technique is as follows: inputting a string of variable length (i.e., order identity), which is calculated by the HASH function to return a string of fixed length (i.e., the target deposit certificate identity).

In certain embodiments related to step S33, the target electronic data deposit certificate corresponding to the target deposit certificate identity includes: shooting information, multimedia data and updated order information, where the shooting information includes: video information or commodity image when the complained commodity is being packaged, and the multimedia data includes: live broadcast fragments and communication data corresponding to the complained commodity, where the communication data can be text data.

In some embodiments related to Step S34, a first comparison result can be obtained by comparing the multimedia information with the complaint picture or the complaint video, and a second comparison result can be obtained by comparing the complaint text with the communication data, and finally the processing result can be obtained according to the first comparison result and the second comparison result.

In certain embodiments, a feature distance between the complaint picture and the commodity image carried in the multimedia information can be obtained. The feature distance is the distance between the features of the image. According to the obtained feature distance, the image similarity degree between the complaint picture and the commodity image is determined as a first comparison result from a preset corresponding relationship between the feature distance and the image similarity degree;

It should be noted that the image similarity shows a decreasing trend with the increase of feature distance; When the feature distance is equal to 0, the image similarity is equal to 1; When the feature distance tends to be infinity, the image similarity tends to be 0.

In addition, obtaining the second comparison result by comparing the complaint text with the communication data can be: determining a first emotion index by analyzing the complaint text at the part-of-speech level, determining a second emotion index by analyzing the communication data at the part-of-speech level, and obtaining the second comparison result by comparing the first emotion index with the second emotion index.

Understandably, the complaint text is preprocessed and segmented into sentences, and the segmented text is segmented into words by using word segmentation algorithm, to obtain word segmented text; inputting the word segmented text into a trained word vector model to obtain a first word vector, and determining a first emotion index according to the first word vector; carrying out text preprocessing and sentence segmentation on communication data, and using word segmentation algorithm to segment words to obtain the segmented text; inputting the word segmented text into the trained word vector model to obtain a second word vector, and determining a second emotion index according to the second word vector, where the emotion index is obtained by weighted summation calculation according to the part of speech of the word vector; then, the first emotion index and the second emotion index are compared to obtain an emotion difference value, and the emotion difference value is taken as the second comparison result.

In some embodiments, determining the processing result according to the first comparison result and the second comparison result may be determining that the complaint information is valid when the image phase velocity is less than a preset similarity and the emotional difference is greater than a preset threshold, and executing corresponding processing measures according to the complaint information.

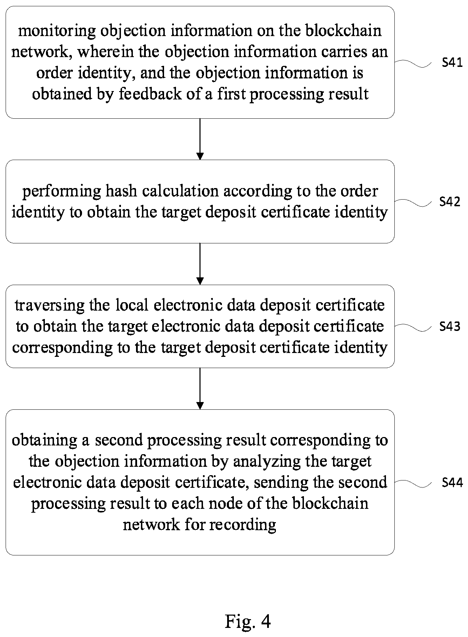

Fig. 4 is a flowchart of a blockchain-based transaction processing method provided by an embodiment of the present disclosure. As shown in Fig. 4, the blockchain-based transaction processing method provided by the present embodiment is applied to a second processing terminal on a blockchain network. The method includes:
Step S41, monitoring objection information on the blockchain network, wherein the objection information carries an order identity, and the objection information is obtained by feedback of a first processing result;
Step S42, calculating according to the order identity to obtain the target deposit certificate identity;
Step S43, traversing the local electronic data deposit certificate to obtain the target electronic data deposit certificate corresponding to the target deposit certificate identity; and
Step S44, obtaining a second processing result by analyzing the objection information according to the target electronic data deposit certificate, sending the second processing result to each node of the blockchain network for recording.

In certain embodiments related to step S41 the objection information may include: a complaint text, a complaint picture or a complaint video and the like.

In certain embodiments related to step S42, a technique called digital digest is adopted. The digital digest technique mainly uses a HASH function. The calculation process of this technique is as follows: inputting a string of variable length (i.e., order identity), returning a string of fixed length (i.e., the target deposit certificate identity).

In certain embodiments related to step S43, a technique called digital digest is adopted. The digital digest technique mainly uses a HASH function. The calculation process of this technique is as follows: inputting a string of variable length (i.e., order identity), which is calculated by the HASH function to return a string of fixed length (i.e., the target deposit certificate identity).

In some embodiments related to step S44, the analysis method for analyzing the objection information according to the target electronic data deposit certificate may be the analysis method in the above-described embodiments. In addition, the target electronic data deposit certificate and objection information can also be sent to a designated terminal. It should be noted that sending the target electronic data deposit certificate and objection information to the designated terminal can enable the auditor to analyze and judge and input the judgment result to the designated terminal, so it is necessary to receive the instruction information and determine the second processing result according to the instruction information.

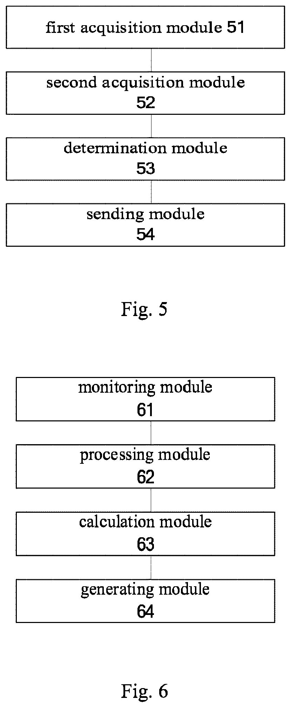

Fig. 5 is a block diagram of a first blockchain-based client provided by an embodiment of the present disclosure, the apparatus can be implemented as part or all of an electronic device by software, hardware, or a combination of both. As shown in Fig. 5, the apparatus includes:
a first acquisition module 51, configured for entering a live broadcast interface according to a trigger operation acting on a live broadcast link, and acquiring a user identity;
a second acquisition module 52, configured for acquiring order information associated with the user identity based on the live broadcast interface;
a determination module 53, configured for determining multimedia data associated with the order information; and
a sending module 54, configured for sending the order information and the multimedia data to each node of the blockchain network for recording.

Fig. 6 is a block diagram of a second blockchain-based client provided by an embodiment of the present disclosure. the apparatus may be implemented as part or all of an electronic device by software, hardware or a combination of both. As shown in Fig. 6, the apparatus includes:
a monitoring module 61, configured for monitoring order information and multimedia data on the blockchain network, wherein the order information includes an order identity and an order state;
a processing module 62, configured for calling a camera device to shoot a designated area to obtain shooting information and calling a first processing contract to update the first order state in the order information to a second order state when the order state in the order information is a first order state;
a calculation module 63, configured for carrying out hash calculation according to the order identity to obtain a certificate a deposit certificate identity; and
a generating module 64, configured for generating an electronic data deposit certificate according to the deposit certificate identity, shooting information, multimedia data and updated order information, the electronic data deposit certificate is sent to each node of the blockchain network for recording.

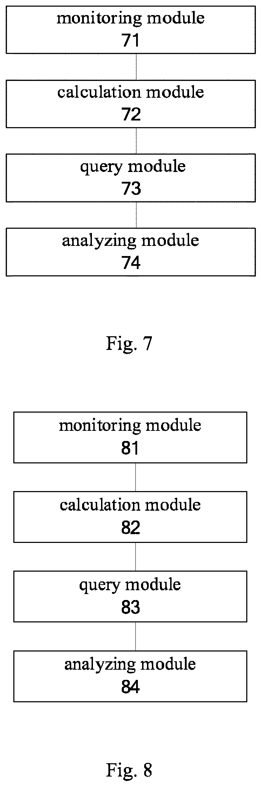

Fig. 7 is a block diagram of a first blockchain-based processing terminal provided by an embodiment of the present disclosure. The apparatus may be implemented as part or all of an electronic device by software, hardware or a combination of both. As shown in Fig. 7, the apparatus includes:
a monitoring module 71, configured for monitoring complaint information on the blockchain network, wherein the complaint information carries an order identity;
a calculation module 72, configured for carrying out hash calculation according to the order identity to obtain a target deposit certificate identity;
a query module 73, configured for traversing the local electronic data deposit certificate to obtain a target electronic data deposit certificate corresponding to the target deposit certificate identity; and
an analyzing module 74, configured for analyzing the complaint information according to the target electronic data deposit certificate to obtain a processing result, sending the processing result to each node of the blockchain network for recording.

Fig. 8 is a block diagram of a second blockchain-based processing terminal provided by an embodiment of the present disclosure. The apparatus may be implemented as part or all of an electronic device by software, hardware or a combination of both. As shown in Fig. 8, the apparatus includes:
a monitoring module 81, configured for monitoring objection information on the blockchain network, wherein the objection information carries an order identity, and the objection information is obtained by feedback of a first processing result;
a calculation module 82, configured for calculating according to the order identity to obtain the target deposit certificate identity;
a query module 83, configured for traversing the local electronic data deposit certificate to obtain the target electronic data deposit certificate corresponding to the target deposit certificate identity; and
an analyzing module 84, configured for obtaining a second processing result by analyzing the objection information according to the target electronic data deposit certificate, sending the second processing result to each node of the blockchain network for recording.

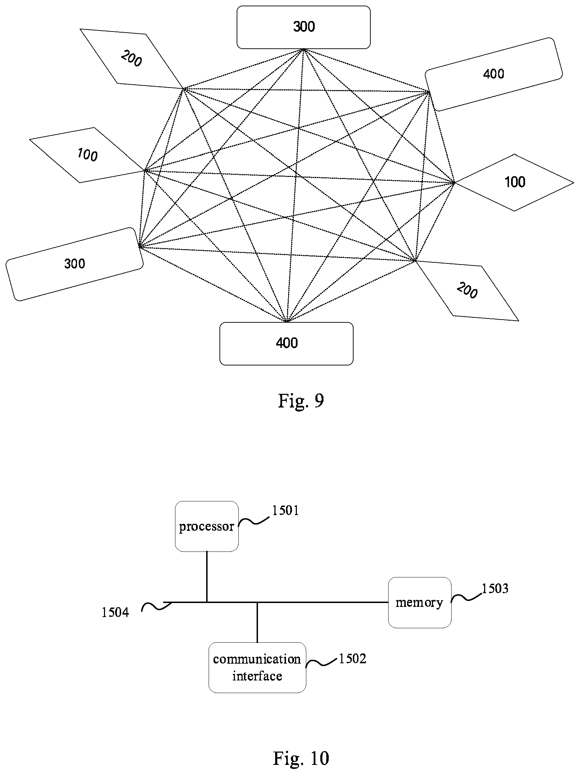

Fig. 9 is a schematic diagram of a blockchain-based transaction processing system provided by an embodiment of the present disclosure. As shown in Fig. 9, the system includes a first client 100 provided by the above embodiments, a second client 200 provided by the above embodiments, a third client 300 provided by the above embodiments and a fourth client 400 provided by the above embodiments.

An embodiment of the present disclosure also provides an electronic device. As shown in Fig. 10, the electronic device may include a processor 1501, a communication interface 1502, a memory 1503 and a communication bus 1504, where the processor 1501, the communication interface 1502 and the memory 1503 communicate with each other through the communication bus 1504;

the memory 1503 is configured to store computer programs;

the processor 1501 is configured to implement the steps of the above-described embodiments when executing computer programs stored on memory 1503.

The communication bus mentioned by the terminal may be a Peripheral Component Interconnect (PCI) bus or an Extended Industry Standard Architecture (EISA) bus or the like. The communication bus can be divided into address bus, data bus, control bus and so on. For ease of presentation, only one thick line is used in the figure, but it does not mean that there is only one bus or one type of bus.

The communication interface is used for communication between the terminal and other devices.

The memory may include a Random Access Memory (RAM) or a non-volatile memory such as at least one disk memory. Optionally, the memory may also be at least one memory device located remotely from the processor.

The processor can be a general-purpose processor, including a Central Processing Unit (CPU), a Network Processor (NP), and the like; It can also be Digital Signal Processing (DSP), Application Specific Integrated Circuit (ASIC), Field-Programmable Gate Array (FPGA) or other programmable logic devices, discrete gates or transistor logic devices, and discrete hardware components.

The present disclosure also provides a computer-readable storage medium having instructions stored therein that, when run on the computer, cause the computer to execute the blockchain-based transaction processing method of the present disclosure.

The present disclosure also provides a computer program product including instructions that, when run on a computer, cause the computer to execute the blockchain-based transaction processing method of the present disclosure.

In the above-described embodiments it may be implemented in whole or in part by software hardware firmware or any combination thereof. When implemented in software, it can be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium, Or from one computer-readable storage medium to another, For example, the computer instructions may be transmitted from one Web site, computer, server, or data center to another Web site, computer, server, or data center via wired (e.g., coaxial cable, optical fiber, digital subscriber line (DSL)) or wireless (e.g., infrared, wireless, microwave, etc.). The computer-readable storage medium may be any usable medium accessible to a computer or a data storage device such as a server, data center, or the like that includes one or more usable media integration. The usable media may be magnetic media (e.g., floppy disk, hard disk, magnetic tape), optical media (e.g., DVD), or semiconductor media (e.g., Solid State Disk (SSD)), etc.

The above description is only a preferred embodiment of the present disclosure and is not intended to limit the scope of protection of the present disclosure. Any modifications, equivalents, modifications, etc. made within the spirit and principles of this disclosure are within the scope of protection of this disclosure.

The foregoing is only a specific embodiment of the present disclosure to enable those skilled in the art to understand or implement the present disclosure. Various modifications to these embodiments will be apparent to those skilled in the art and the general principles defined herein may be implemented in other embodiments without departing from the spirit or scope of the present disclosure. Accordingly, the present disclosure will not be limited to the embodiments shown herein but is intended to conform to the widest scope consistent with the principles and novel features disclosed herein.

## Claims

1. A blockchain-based transaction processing method, applied to a first client on a blockchain network, comprising:
entering a live broadcast interface according to a trigger operation acting on a live broadcast link, and acquiring a user identity;
acquiring order information associated with the user identity based on the live broadcast interface;
determining multimedia data associated with the order information; and
sending the order information and the multimedia data to each node of the blockchain network for recording.

2. The method according to claim 1, wherein acquiring order information associated with the user identity based on the live broadcast interface comprises:
acquiring transaction information and transaction time associated with the user identity;
generating an order identity according to the user identity and the transaction time;
determining a first order state according to the transaction information; and
generating the order information according to the order identity and the first order state.

3. The method according to claim 1 or 2, wherein the method further comprises:
acquiring a live video and object information associated with the live video;
splitting the live video according to the object information to obtain at least one video segment;
determining the multimedia data associated with the order information comprises:
acquiring the target object information carried by the order information;
determining a target video segment corresponding to the target object information;
acquiring communication data associated with the user identity based on the target video segment; and
obtaining the multimedia data according to the communication data and the target video segment.

4. The method according to any one of claims 1 to 3, wherein the method further comprises:
monitoring first response information on the blockchain network, the first response information is generated by the blockchain network calling a first processing contract;
determining an order state in the order information according to the first response information;
calling a second processing contract to update a second order state in the order information to a third order state when the order state is the second order state and signature information is received; and
sending updated order information to each node of the blockchain network for recording.

5. The method according to claim 4, wherein the method further comprises:
acquiring complaint information;
calling a third processing contract according to the complaint information to update a third order state in the order information to a fourth order state; and
sending the complaint information and the updated order information to each node of the blockchain network for recording.

6. The method according to claim 5, wherein the method further comprises:
monitoring second response information on the blockchain network, the second response information is generated by calling a fourth processing contract by the blockchain network;
determining a first processing result corresponding to the complaint information according to the second response information;
calling a fifth processing contract according to objection information to update a fourth order state in the order information to a fifth order state when the objection information fed back according to the first processing result is obtained; and
sending the objection information and the updated order information to each node of the blockchain network for recording.

7. The method according to claim 6, wherein the method further comprises:
monitoring third response information on the blockchain network, the third response information is generated by calling a sixth processing contract by the blockchain network; and
determining a second processing result corresponding to the objection information according to the third response information.

8. A blockchain-based transaction processing method, applied to a second client on a blockchain network, comprising:
monitoring order information and multimedia data on the blockchain network, wherein the order information comprises an order identity and an order state;
calling a camera device to shoot a designated area to obtain shooting information and calling a first processing contract to update the first order state in the order information to a second order state when the order state in the order information is a first order state;
carrying out hash calculation according to the order identity to obtain a deposit certificate identity; and
generating an electronic data deposit certificate according to the deposit certificate identity, shooting information, multimedia data and updated order information, sending the electronic data deposit certificate to each node of the blockchain network for recording.

9. A blockchain-based transaction processing method, applied to a first processing terminal on a blockchain network, comprising:
monitoring complaint information on the blockchain network, wherein the complaint information carries an order identity;
carrying out hash calculation according to the order identity to obtain a target deposit certificate identity;
traversing the local electronic data deposit certificate to obtain a target electronic data deposit certificate corresponding to the target deposit certificate identity; and
analyzing the complaint information according to the target electronic data deposit certificate to obtain a processing result, sending the processing result to each node of the blockchain network for recording.

10. A blockchain-based transaction processing method, applied to a second processing terminal on a blockchain network, comprising:
monitoring objection information on the blockchain network, wherein the objection information carries an order identity, and the objection information is obtained by feedback of a first processing result;
calculating according to the order identity to obtain the target deposit certificate identity;
traversing the local electronic data deposit certificate to obtain the target electronic data deposit certificate corresponding to the target deposit certificate identity; and
obtaining a second processing result by analyzing the objection information according to the target electronic data deposit certificate, sending the second processing result to each node of the blockchain network for recording.

11. A first blockchain-based client, comprising:
a first acquisition module, configured for entering a live broadcast interface according to a trigger operation acting on a live broadcast link,and acquiring a user identity;
a second acquisition module, configured for acquiring order information associated with the user identity based on the live broadcast interface;
a determination module, configured for determining multimedia data associated with the order information; and
a sending module, configured for sending the order information and the multimedia data to each node of the blockchain network for recording.

12. A second blockchain-based client, comprising:
a monitoring module, configured for monitoring order information and multimedia data on the blockchain network, wherein the order information comprises an order identity and an order state;
a processing module, configured for calling a camera device to shoot a designated area to obtain shooting information and calling a first processing contract to update the first order state in the order information to a second order state when the order state in the order information is a first order state;
a calculation module, configured for carrying out hash calculation according to the order identity to obtain a certificate a deposit certificate identity; and
a generating module, configured for generating an electronic data deposit certificate according to the deposit certificate identity, shooting information, multimedia data and updated order information, sending the electronic data deposit certificate to each node of the blockchain network for recording.

13. A first blockchain-based processing terminal, comprising:
a monitoring module, configured for monitoring complaint information on the blockchain network, wherein the complaint information carries an order identity;
a calculation module, configured for carrying out hash calculation according to the order identity to obtain a target deposit certificate identity;
a query module, configured for traversing the local electronic data deposit certificate to obtain a target electronic data deposit certificate corresponding to the target deposit certificate identity; and
an analyzing module, configured for analyzing the complaint information according to the target electronic data deposit certificate to obtain a processing result, sending the processing result to each node of the blockchain network for recording.

14. A second blockchain-based processing terminal, comprising:
a monitoring module, configured for monitoring objection information on the blockchain network, wherein the objection information carries an order identity, and the objection information is obtained by feedback of a first processing result;
a calculation module, configured for calculating according to the order identity to obtain the target deposit certificate identity;
a query module, configured for traversing the local electronic data deposit certificate to obtain the target electronic data deposit certificate corresponding to the target deposit certificate identity; and
an analyzing module, configured for obtaining a second processing result by analyzing the objection information according to the target electronic data deposit certificate, sending the second processing result to each node of the blockchain network for recording.

15. A transaction blockchain-based processing system, wherein the system is a blockchain network composed of a plurality of blockchain nodes;
the blockchain node comprises the first blockchain-based client according to claim 11, the second blockchain-based client according to claim 12, the first blockchain-based processing terminal according to claim 13, and the second blockchain-based processing terminal according to claim 14.

16. A storage medium, comprising a stored program, wherein the program executes the method according to any one of claims 1 to 10 while running.

17. An electronic device, comprising a processor, a communication interface, a memory, and a communication bus, wherein the processor, the communication interface, and the memory communicate with each other through the communication bus;
the memory is configured to store computer programs; and
the processor is configured to perform the method of any one of claims 1 to 10 by running a program stored on the memory.
